# EUROPEAN PATENT SPECIFICATION

(11) **EP 0 810 140 B1**
(45) Date of publication and mention of the grant of the patent: **19.04.2000**
(21) Application number: 97108469.4
(22) Date of filing: 26.05.1997
(51) Int. Cl.: B62D 1/19

(54) **A power transmission shaft in a steering unit and assembly method thereof**
Welle für die Drehmomentübertragung in einer Lenkeinheit und Verfahren für ihren Zusammenbau
Arbre de transmission de couple pour un ensemble de direction et procédé pour son assemblage

(30) Priority: 30.05.1996 JP 13639496
(43) Date of publication of application: 03.12.1997
(73) Proprietor: KOYO SEIKO CO., LTD., Osaka 542-0081 (JP)
(72) Inventor: Aota, Kenichi, c/o Koyo Seiko Co., Ltd., Chuo-ku, Osaka 542 (JP); Morita, Motohiro, c/o Koyo Industries Co., Ltd., Yao City, Osaka 581 (JP)
(74) Representative: TER MEER STEINMEISTER & PARTNER GbR

(56) References cited:
- EP-A- 0 612 649
- DE-A- 2 322 451
- FR-A- 2 508 860

## Description

### BACKGROUND OF THE INVENTION

### Field of the Invention:

The present invention relates to a power transmission shaft in a steering unit that shortens in axial direction born by impact load over a specified impact load and thereby absorbs impact, and a method for assembling thereof. The power transmission shaft herein means an intermediate shaft that is arranged between a steering shaft and a steering gear in an automobile steering unit, a steering column that is arranged between this steering shaft and a steering wheel and the like.

### Description of Related Art:

Document EP 0 612 649 A1 shows a shaft according to the preamble of claim 1 for automotive vehicles comprising a hollow shaft and an insertion shaft being slidable inserted into each other. These shafts are provided with engaging male and female serrations, respectively, for the transmission of power in the circumferential direction, and are displaceable in the axial direction. The hollow shaft is provided with inward depressed portions which are arranged at the portion of said hollow shaft where the engaging male serrations exist, which serves as an energy absorption means when an impact load acts upon the transmission shaft.

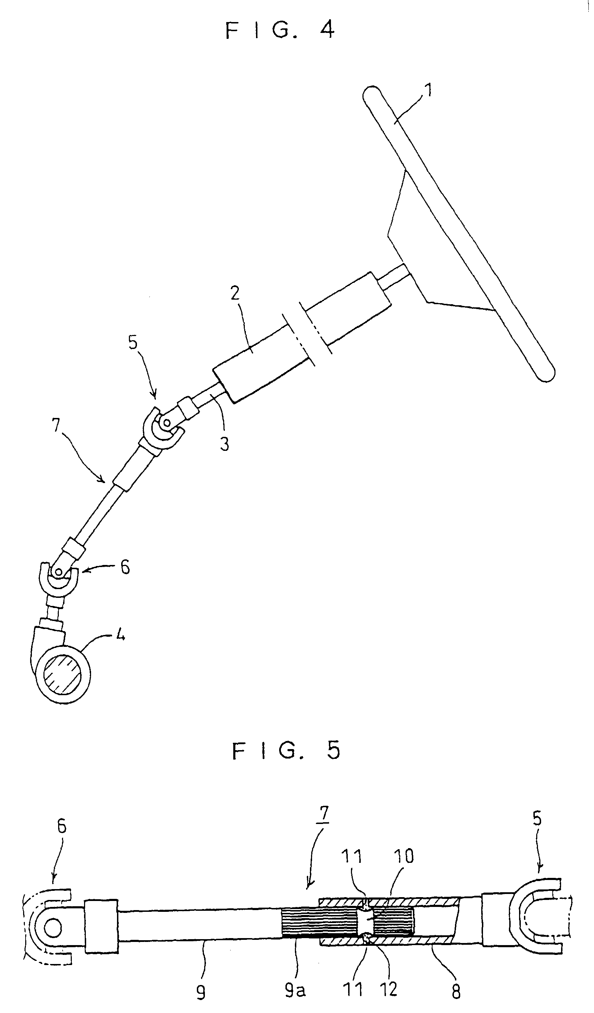

Furthermore, FIG. 4 shows another structure of a general steering unit in an automobile in the prior art. In the figure, 1 represents a steering wheel, 2 a steering column, 3 a steering shaft, 4 a steering gear, 5 and 6 universal joints respectively, and 7 represents an intermediate shaft.

The intermediate shaft 7 transmits turning power working on the steering wheel 1 to the steering gear 4, and is so made shorten at excessive impact owing to collision or so and thereby absorb impact so that such impact should not be transmitted to a automobile driver.

FIG. 5 is a side view of an important portion of the intermediate shaft. The intermediate shaft 7 comprises a hollow shaft 8 and an insertion shaft 9 which are so connected as to be able to move in axial direction respectively. A female serration 8a is arranged on the inner circumference of the hollow shaft 8, while arranged on the outer circumference at the end of the insertion shaft 9 is a male serration 9a that engages with the female serration 8a of the hollow shaft 8. And a circumferential slot 10 is formed on the outer circumference in the area to form the male serration 9a of the insertion shaft 9. On the other hand, in the hollow shaft 8, a hole 11 that goes through in radial direction is arranged at two position that are opposite by 180 degrees in the area corresponding to the abovementioned circumferential groove 10. And through this hole 11, resin 12 is filled between the circumferential groove 10 and the hollow shaft 8, and by hardening of this filling resin 12, the hollow shaft 8 and the insertion shaft 9 are connected integrally.

In the hollow shaft 7 of the structure mentioned above, when excessive impact comes, the filling resin 12 is sheared, and the insertion shaft 9 goes into the hollow shaft 8, and thereby the entire hollow shaft 7 shortens, and thus it absorbs impact.

By the way, in the above conventional example, it requires to implement and harden the filling resin 12 in the course of production, accordingly, it is pointed out that the conventional example has a lot of trouble, and rather bad working efficiency, and causes high production costs.

And further, such a steering unit assembled in an engine room that will be subject to high service temperature, it is necessary to pay attention to a prevention against the deterioration of the strength of the filling resin 12, and when the strength is deteriorated for some reason, specified shear resistance may not be attained, leading to unevenness of draft load. By the way, draft load herein means impact load at the moment to shorten the intermediate shaft 7. Moreover, when the filling resin 12 is sheared, draft load is apt to decline sharply, therefore, sufficient considerations must be paid to impact absorption.

By the way, the steering column 2 shown in FIG. 4 comprises a hollow shaft and an insertion shaft in the same manner as the abovementioned intermediate shaft 7, and these hollow shaft and insertion shaft are connected integrally by use of the filling resin 12 as shown in FIG. 5 to form an impact absorbing structure. As a consequence, this steering column 2 also has nonconformities similar to the above.

### SUMMARY OF THE INVENTION

Accordingly, an object of the present invention is to provide a power transmission shaft in steering unit, that enables to eliminate much of wastes in production process and assembly process and thereby enhance cost reduction.

Further, another object of the present invention is to provide a power transmission shaft in steering unit, that enables to maintain draft load constant irrespective of ambient temperature.

Moreover, other object of the present invention is to provide a power transmission shaft in steering unit, wherein draft load does not decrease rapidly but remains for a while, thereby impact is absorbed sufficiently and securely. To achieve these objects the shaft of the present invention is characterized by the features of claim 1.

A method for assembling a shaft characterized by the features of claim 5 is also provided.

According to the above structure, the hollow shaft and the insertion shaft are connected and fixed with the engaging convex portion of the insertion shaft engagedly inserted into the depressed portion of the hollow shaft, therefore, at impact load, the intermediate shaft does not shorten rapidly and without resistance after the resin portion shears and absorbs impact as in the conventional manner, but impact absorption is continued until the engaging convex portion of the insertion shaft passes the depressed portion of the hollow shaft in shortening action, and after this period, the intermediate shaft shortens rapidly without resistance. Thereby, sufficient impact absorption is realized.

The abovementioned impact absorption is made by the plastic deformation of the depressed portion of the hollow shaft in axial direction by the engaging convex portion of the insertion shaft, and the slide resistance between the engaging convex portion and the engaging concave portion pressed and contacted at the opposite side of the depressed portion by the depressed portion. And resin is not used as in the conventional manner, there is not deterioration owing to service ambient temperature, and draft load is maintained constant, hence high reliability.

The engaging concave portion and the engaging convex portion may be in any shape so long as they can connect the hollow shaft and the insertion shaft by their engagement so that they can transmit power in circumferential direction, and so that they are displaceable in axial direction, for example, the engaging concave portion may comprise a female serration, while the engaging convex portion may comprise a male serration. In the case of such a serration structure, since the male serration is saw-tooth-shaped, it can be easily engaged into the depressed portion, and a strong engaging structure can be attained.

And by forming the concave portion to form the depressed portion on the way of the insertion shaft, the depressed portion with excellent shape precision can be formed by engaging a roller or so into the concave portion to form the depressed portion.

Further, since the depressed portion is formed on part of the circumferential surface of the hollow shaft, the concave portion to form the depressed portion may be formed on part of the circumferential surface of the insertion shaft, but if the concave portion to form the depressed portion is circumferential slot, it becomes easier to position roller or so in circumferential direction of the outer circumference of the hollow shaft.

According to the present invention, it is possible to attain a steering unit that has excellent performances to bring about the abovementioned effects of the present invention, and also to obtain a engaging structure for a male serration of the insertion shaft on the depressed portion in a set of simple work.

Other objects, constructions, operations, and effects of the present invention will become apparent more fully from the description given below, but it should be understood that the description and examples given below are intended to illustrate the present invention, and not to limit the scope of the present invention, since many modifications and variations of the examples disclosed herein are within the scope of the present invention.

### BRIEF DESCRIPTION OF THE DRAWINGS

The accompanying drawings, which are incorporated in and form a part of this specification, illustrate embodiments of the present invention and, together with the description serve to explain the principles of the present invention. In all these figures, like components are indicated by the same numerals.

In the drawings:

FIG. 1 is a side view of an important portion of the intermediate shaft of a steering unit according to one embodiment of the present invention.

FIG. 2 is a cross section (2)-(2) in FIG. 1, while FIG. 3 is an explanatory diagram to show an assembly method of an intermediate shaft.

FIG. 4 is a side view showing the structure of a general steering unit, and FIG. 5 is a side view of an important portion of a conventional intermediate shaft.

### DETAILED DESCRIPTION OF THE INVENTION

The invention is illustrated in more details by reference to the following referential examples and preferred embodiments wherein.

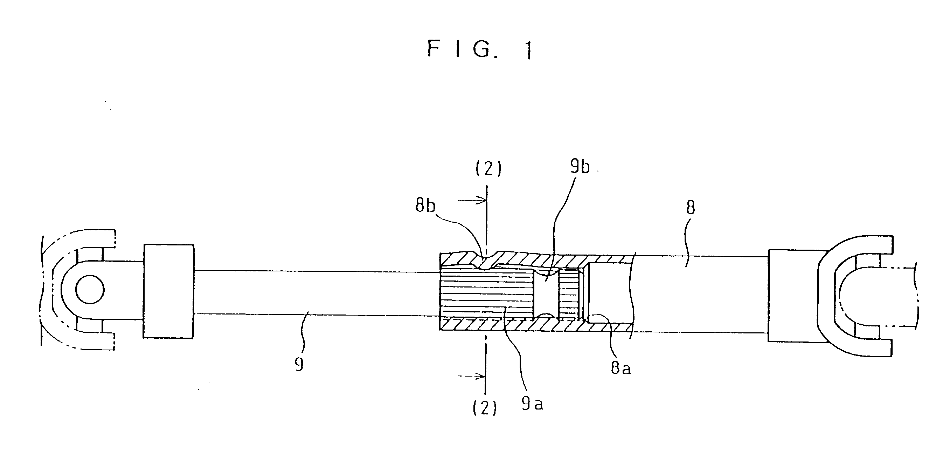

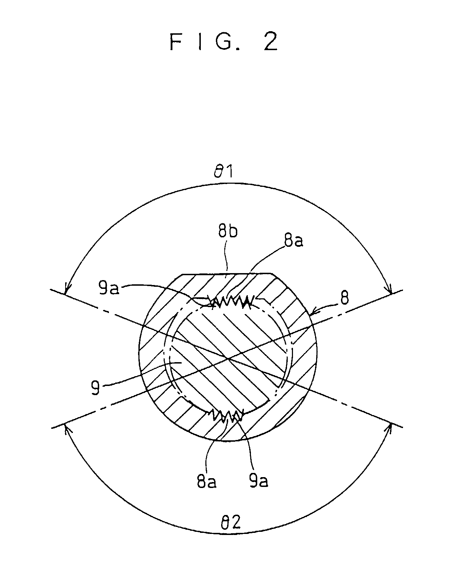

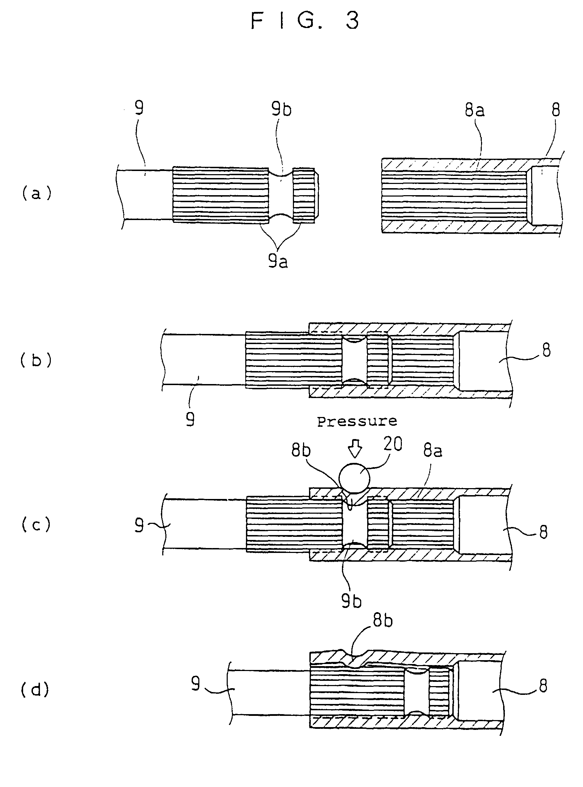

FIG. 1 is a side view of an important portion of the intermediate shaft of a steering unit according to one embodiment of the present invention. FIG. 2 is a cross section (2)-(2) in FIG. 1, while FIG. 3 is an explanatory diagram to show an assembly method of an intermediate shaft. Herein, the intermediate shaft shown in FIG. 4 is taken up as an example of the power transmission shaft of steering unit.

In the figure, 5 and 6 represent universal joints respectively, and 7 represents an intermediate shaft. The intermediate shaft 7 comprises a hollow shaft 8 and an insertion shaft 9 that are engaged with each other so that the intermediate shaft can shorten in shaft direction. These hallow shaft 8 and insertion shaft 9 are made of metallic material.

A female serration 8a is formed on the inner circumference of the hollow shaft 8, while a male serration 9a that engages with the female serration 8a of the hollow shaft 8 is formed on the outer circumference of the insertion shaft 9. The female serration 8a and the male serration 9a are formed by pulling process or rolling process. On a portion on the circumference of the forming area of the female serration 8a of the hollow shaft 8, arranged is a depressed portion 8b that protrudes inward in radial direction. And on the outer circumference on the way of the formation area of the male serration 8a of the insertion shaft 9, formed is a circumferential slot 9b for forming a depressed portion.

And since a depressed portion 8b is arranged on the hollow shaft 8, the male serration 9a of the insertion shaft 9 engages with the depressed portion 8b, while the male serration 9a of the insertion shaft 9 contact under pressure with the female serration 8a at 180 degrees opposite to the depressed portion 8b. Thereby, the hollow shaft 8 and the insertion shaft 9 are held up so that they should not move relatively in axial direction, and so that there is no idleness between the hollow shaft 8 and the insertion shaft 9 in circumferential direction.

In the next place, the assembly method of the intermediate shaft 7 is explained in reference to FIG. 3.

First, as shown in FIG. 3(a), the hollow shaft 8 where the female serration 8a is formed on inner circumference thereof, and the insertion shaft 9 where the male serration 9a and the circumferential slot 9b are formed on outer circumference thereof are prepared, and they are arranged coaxially, and as shown in FIG. 3(b), the insertion shaft 9 is engaged halfway to the hollow shaft 8. This term halfway means a position which is short of the necessary engagement dimension and a position where the circumferential slot 9b of the insertion shaft 9 goes into the inner circumference of the hollow shaft 8.

In this status, as shown in FIG. 3(c), prepared roller 20 is attached to the outer circumferential portion of the hollow shaft 8 corresponding to the circumferential slot 9b of the insertion shaft 9, and the roller 20 is pressed, and part of the circumferential surface of the hollow shaft 8 is inserted inward in radial direction. Thereby, the depressed portion 8b is formed.

In the formation of the abovementioned depressed portion 8b, the depressed portion 8b is formed on part of the circumferential surface of the hollow shaft 8, so the concave portion for forming the depressed portion 8b may be also formed on part of the circumferential surface of the insertion shaft 9, but the concave portion is made into the circumferential slot 9b as shown above, therefore, positioning of the outer circumferential portion of the hollow shaft 8 of the roller 20 is easily made, which is advantageous.

Further, since the circumferential slot 9b is formed halfway on the insertion shaft 9, it is possible to form the depressed portion 8b by engaging the roller to the circumferential slot 9b, and it is possible to form the depressed portion 8b with excellent shape precision. For example, when a small diameter portion is formed at the shaft end of the insertion shaft 9, the roller 20 is not engaged into the circumferential slot 9b when the depressed portion 8b, the shape of the depressed portion 8b is not constant. And when a small diameter portion is formed at the shaft end of the insertion shaft 9, since there is no male serration 9a at the end of the insertion shaft 9, positioning of the male serration 9a and the female serration 8a is not possible when the end of the insertion shaft 9 is inserted from the end of the hollow shaft 8, and the insertion shaft 9 does not engage smoothly with the hollow shaft 8, however, these problems will not occur with the abovementioned embodiment.

And then, as shown in FIG. 2 and in FIG. 3(d), the insertion shaft 9 is inserted into the hollow shaft 8 to the extent where the necessary engagement dimension is satisfied. At this moment, the existence of the depressed portion 8b makes the inner diameter of the hollow shaft 8 small, so the insertion shaft 9 is inserted under pressure. In this pressure insertion process, part of the male serration 9a of the insertion shaft 9 is engagedly caught by the depressed portion 8b of the hollow shaft 8, accordingly the depressed portion 8b in the hollow shaft 8 and the required angle area θ1 at both sides in circumferential direction swell out a little outward in radial direction, therefore, the female serration 8a floats a little away from the male serration 9a, while the female serration 8a of other area θ2 is contacted to the male serration 9a under pressure.

In the abovementioned structure, at impact load, the intermediate shaft does not shorten rapidly and without resistance after the resin portion shears and absorbs impact as in the conventional manner, but impact absorption is continued until the male serration 9a of the insertion shaft 9 passes the depressed portion 8b of the hollow shaft 8 in shortening action, and after this period, the intermediate shaft 7 shortens rapidly without resistance.

Thereby, sufficient impact absorption is realized. By the way, the above impact absorption is made by the plastic deformation of the depressed portion 8b of the hollow shaft 8 in shaft direction by the male serration 9a of the insertion shaft 9, and the slide resistance between the male serration 9a and the female serration 8a pressed and contacted by the depressed portion 8b. And resin is not used as in the conventional manner, there is not deterioration owing to service ambient temperature, and draft load is maintained constant, hence high reliability.

By the way, in the case of the intermediate shaft 7 of the abovementioned structure, draft load may be variable optionally by appropriately setting the depressed dimension of the depressed portion 8b of the hollow shaft 8, the size in shaft direction and circumferential direction and so on. This draft load may be set normally according to requirements.

In the case of the intermediate shaft 7 mentioned heretofore, since there is no need to arrange any hole in the hollow shaft 8 to become resin stopper hole as seen in the conventional example, the number of production processes is reduced, and the insertion shaft 9 may be produced in the same number of production processes as that for the conventional insertion shaft. And, though it is necessary to add a pressure process in the process to insert the insertion shaft 9 into the hollow shaft 8, but the process is simple and less time-consuming compared with the resin filling and hardening process in the prior art.

In this manner, the production costs may be reduced to a great extent. And since a relatively large depressed portion 8b is formed on the hollow shaft 8 by use of the circumferential slot 9b of the insertion slot 9, even if the depressed portion 8b that is formed under pressure springs back, the shape precision of the depressed portion 8b can be made high, thereby sufficient draft load can be attained.

For instance, in the prior art, disclosed is a method where the hollow shaft 8 and the insertion shaft 9 are engaged through serration, and part of the outer circumference of the hollow shaft 8 is deformed by pressure and engaged at the engagement area of the shafts 8 and 9, however in this case, only a little amount of the pressure deformation of the hollow shaft 8 can be secured, and sufficient deformation is not possible owing to spring back of deformed portion, accordingly the connection strength between the hollow shaft 8 and the insertion shaft 9 becomes insufficient, and it is impossible to obtain sufficient draft load, which are the nonconformities arising from the prior art.

Compared with these conventional methods, the structure according to the present invention appears to be excellent.

By the way, the present invention may be embodied in other specific forms without departing from the essential characteristics thereof. The present embodiments are therefore to be considered in all respects as illustrative and not restrictive.

For example, the hollow shaft 8 and the insertion shaft 9 may be engaged by splines. And the depressed portions 8b to be formed on the hollow shaft 8 may be arranged not on a single position but on several positions in axial direction. Further, the depressed portion 8b may be spotted on several positions in circumferential direction. In this case, it is necessary to arrange at adjacent positions in circumferential direction.

Besides the above, in forming the depressed portion 8b, the roller 20 as mentioned above may not be used, but an appropriate material to be attached to the press rod of a press machine may be used. Moreover, a single or several hard balls may be used. And in the above embodiment, the power transmission shaft of a steering unit is the intermediate shaft 7 arranged between the steering shaft 3 and the steering gear 4 in the steering unit in an automobile shown in FIG. 4, however, it may be a steering column 2 to be arranged between the steering shaft 2 and the steering wheel 1. In the case of the steering column 2, the steering column comprises a similar hollow shaft and insertion shaft to those in the intermediate shaft 7 in fundamental manner, therefore, the hollow shaft and insertion shaft in this case are not illustrated, but they may be arranged so as to have the same impact absorption structure as the abovementioned embodiment.

While there has been described what is at present considered to be preferred embodiments of the present invention, it will be understood that various modifications may be made therein, and it is intended to cover in the appended claims all such modifications.

## Claims

1. A power transmission shaft (7) in a steering unit that shortens in axial direction born by impact load over a specified impact load and thereby absorbs impact, which comprises a hollow shaft (8) having an engaging concave portion (8a) on the inner circumference thereof, and an insertion shaft (9) inserted into the hollow shaft (8) and having an engaging convex portion (9a) on the outer circumference thereof that engages with the above engaging concave portion (8a) of the hollow shaft (8), the hollow shaft (8) and the insertion shaft (9) being connected with each other so that they can transmit power in the circumferential direction and are displaceable in the axial direction, said hollow shaft (8) being provided with at least one inward depressed portion (8b) which is arranged at the portion of said hollow shaft (8) where the engaging concave portion (8a) exists, the engaging convex portion (9a) of said insertion shaft (9) being engagedly inserted into the depressed portion (8b) of the hollow shaft (8), being **characterized** by that a concave portion (9b) is arranged at the portion of the engaging convex portion (9a) on the outer circumference of the above insertion shaft (9), and the shape of said inward depressed portion (8b) of said hollow shaft (8) is adapted to fit into the concave portion (9b) of the insertion shaft (9).

2. A power transmission shaft (7) in a steering unit set forth in claim 1, wherein the above engaging concave portion (8a) is made of a female serration, and the above engaging convex portion (9a) is made of a male serration.

3. A power transmission shaft (7) in a steering unit set forth in claim 1, wherein the above concave portion (9b) is arranged at the halfway area of the engaging convex portion in the shaft direction of the above insertion shaft (9).

4. A power transmission shaft (7) in a steering unit set forth in claim 1 or 3, wherein the above concave portion (9b) is a groove continuous in circumferential direction.

5. A method for assembling a power transmission shaft (7) in a steering unit that shortens in axial direction at impact load over a specified impact load and thereby absorbs impact, comprising:
a first step wherein an insertion shaft (9) having a male serration (9a) on the outer circumference thereof and a concave portion (9b) on the way in axial direction of the male serration (9a) is inserted and serration engaged with a hollow shaft (8) having a female serration (8a) on the inner circumference thereof, thereby the insertion shaft (9) is stopped in a position before a specified engagement position;
a second step wherein the portion of the hollow shaft corresponding to the concave portion (9b) of the above insertion shaft (9) is engaged with and inserted into the concave portion (9b) to form a depressed portion (8b); and
a third step wherein the male serration (9a) of the above insertion shaft (9) is engagedly inserted into the depressed portion (8b) of the above hollow shaft (8) by inserting further the above insertion shaft (9) into the above hollow shaft (8).

## Patentansprüche

1. Drehmomentübertragungswelle (7) in einer Lenkeinheit, welche Welle sich in Axialrichtung bei einer Stoßbelastung oberhalb eines vorgegebenen Wertes verkürzt und dadurch einen Stoß aufnimmt, mit einer hohlen Welle (8), die einen konkaven Eingriffsbereich (a) auf dem inneren Umfang aufweist, und einer Eintrittswelle (9), die in die hohle Welle (8) eingefügt ist und einen konvexen Eingriffsbereich (9a) auf dem äußeren Umfang aufweist, der mit dem konkaven Eingriffsbereich (8a) der hohlen Welle (8) zusammenwirkt, welche hohle Welle (8) und Eintrittswelle (9) miteinander so verbunden sind, daß sie Drehmoment in Umfangsrichtung übertragen können und in Axialrichtung gegeneinander verschiebbar sind, welche hohle Welle (8) mit wenigstens einem inneren, eingedrückten Bereich (8b) versehen ist, der in dem Bereich der hohlen Welle (8) angeordnet ist, in dem der konkave Eingriffsbereich (8a) angeordnet ist, wobei der konvexe Eingriffsbereich (9a) der Eintrittswelle (9) in den eingedrückten Bereich (8b) der hohlen Welle (8) eingreift, dadurch **gekennzeichnet**, daß der konkave Bereich (9b) in dem Bereich des konvexen Eingriffsbereichs (9a) auf dem äußeren Umfang der Eintrittswelle (9) angeordnet ist und die Form des inneren, eingedrückten Bereichs (8b) der hohlen Welle (8) so ausgebildet ist, daß sie in den konkaven Bereich (9b) der Eintrittswelle (9) eingreift.

2. Drehmomentübertragungswelle (7) in einer Lenkeinheit gemäß Anspruch 1, bei der der konkave Eingriffsbereich (8a) durch einen Einschnitt gebildet ist und der konvexe Eingriffsbereich (9a) als Vorsprung ausgebildet ist.

3. Drehmomentübertragungswelle (7) in einer Lenkeinheit gemäß Anspruch 1, bei der der konkave Bereich (9b) im Mittelbereich des konvexen Eingriffsbereichs, bezogen auf die Wellenrichtung der Eintrittswelle (9), vorgesehen ist.

4. Drehmomentübertragungswelle (7) in einer Lenkeinheit gemäß Anspruch 1 oder 3, bei der der konkave Bereich(9b) eine in Umfangsrichtung durchlaufende Nut ist.

5. Verfahren zum Montieren einer Drehmomentübertragungswelle (7) in einer Lenkeinheit, die sich in Axialrichtung bei einer Stoßlast oberhalb eines vorgegebenen Wertes verkürzt und dadurch einen Stoß aufnimmt, mit
einem ersten Schritt, bei dem eine Eintrittswelle (9) mit einem positiven Vorsprung (9a) auf dem äußeren Umfang und einem konkaven Bereich (9b) in Axialrichtung des positiven Vorsprungs (9a) eingefügt wird in eine und verzahnungs-verbunden wird mit einer hohlen Welle (8), die einen positiven Eingriffsbereich (8a) auf dem inneren Umfang aufweist, so daß die Eintrittswelle (9) in einer Position vor einer vorgegebenen Eingriffsposition angehalten wird;
einem zweiten Schritt, bei dem der Bereich der hohlen Welle, der dem konkaven Bereich (9b) der Eintrittswelle (9) entspricht, in Eingriff steht mit uns eingefügt wird in den konkaven Bereich (9b) zur Bildung eines eingedrückten Bereichs (8b); und
einem dritten Schritt, bei dem der positive Vorsprung (9a) der Eintrittswelle (9) unter Eingriff eingefügt wird in den eingedrückten Bereich (8b) der hohlen Welle (8) durch Einfügen der Eintrittswelle (9) in die hohle Welle (8).

## Revendications

1. Arbre de transmission de puissance (7) dans une unité de direction qui se raccourcit dans la direction axiale sous l'effet d'une charge d'impact supérieure à une charge d'impact spécifiée, et qui absorbe par conséquent l'impact, qui comprend un arbre creux (8) comportant une partie concave de prise (8a) sur la circonférence intérieure de celle-ci, et un arbre d'insertion (9) inséré dans l'arbre creux (8), et comportant une partie convexe de prise (9a) sur la circonférence extérieure de celui-ci, qui vient en prise avec la partie concave de prise ci-dessus (8a) de l'arbre creux (8), l'arbre creux (8) et l'arbre d'insertion (9) étant raccordés l'un à l'autre de telle sorte qu'ils puissent transmettre de la puissance dans la direction circonférentielle et qu'ils puissent se déplacer dans la direction axiale, ledit arbre creux (8) comportant au moins une partie abaissée vers l'intérieur (8b) qui est agencée au niveau de la partie dudit arbre creux (8) où se trouve la partie concave de prise (8a), la partie convexe de prise (9a) dudit arbre d'insertion (9) étant insérée de façon à venir en prise dans la partie abaissée (8b) de l'arbre creux (8), caractérisé en ce qu'une partie concave (9b) est agencée au niveau de la partie de la partie convexe de prise (9a) sur la circonférence extérieure de l'arbre d'insertion ci-dessus (9), et en ce que la forme de ladite partie abaissée vers l'intérieur (8b) dudit arbre creux (8) est adaptée pour s'adapter dans la partie concave (9b) de l'arbre d'insertion (9).

2. Arbre de transmission de puissance (7) dans une unité de direction selon la revendication 1, dans lequel la partie concave de prise ci-dessus (8a) est constituée par une dentelure femelle, et en ce que la partie convexe de prise ci-dessus (9a) est constituée par une dentelure mâle.

3. Arbre de transmission de puissance (7) dans une unité de direction selon la revendication 1, dans lequel la partie concave ci-dessus (9b) est disposée dans la zone à mi-chemin de la partie convexe de prise dans la direction de l'arbre de l'arbre d'insertion ci-dessus (9).

4. Arbre de transmission de puissance (7) dans une unité de direction selon la revendication 1 ou 3, dans lequel la partie concave ci-dessus (9b) est une rainure continue dans la direction circonférentielle.

5. Procédé pour assembler un arbre de transmission de puissance (7) dans une unité de direction qui se raccourcit dans la direction axiale sous une charge d'impact supérieure à une charge d'impact spécifiée, et qui absorbe par conséquent l'impact, comprenant :
une première étape dans laquelle un arbre d'insertion (9) comportant une dentelure mâle (9a) sur la circonférence extérieure de celui-ci et une partie concave (9b) sur le chemin dans la direction axiale de la dentelure mâle (9a) est inséré et la dentelure vient en prise avec l'arbre creux (8) comportant une dentelure femelle (8a) sur la circonférence intérieure de celui-ci, grâce à quoi l'arbre d'insertion (9) est arrêté dans une position précédant une position de prise spécifiée ;
une deuxième étape dans laquelle la partie de l'arbre creux correspondant à la partie concave (9b) de l'arbre d'insertion ci-dessus (9) vient en prise et est insérée dans la partie concave (9b) de façon à former une partie abaissée (8b) ; et
une troisième étape dans laquelle la dentelure mâle (9a) de l'arbre d'insertion ci-dessus (9) est insérée de façon à venir en prise dans la partie abaissée (8b) de l'arbre creux ci-dessus (8) par une plus ample insertion de l'arbre d'insertion ci-dessus (9) dans l'arbre creux ci-dessus (8).
